# EUROPEAN PATENT APPLICATION

(11) **EP 1 536 588 A1**
(43) Date of publication of application: **01.06.2005**
(21) Application number: 03104398.7
(22) Date of filing: 26.11.2003
(51) Int. Cl.: H04L 1/16, H04L 1/18

(54) **Improved arq protocol performance using acknowledgment filtering**

(30) Priority: 26.11.2003 US 304819
(71) Applicant: Texas Instruments Inc., Dallas, Texas 75265 (US)
(72) Inventor: Mandin, Jeffrey Bernard, Jerusalem (IL); Schain, Mariano, Plano, Texas 75025 (US); Zaltsman, Etai, 47405 Ramat-Hasharon (IL); Gal, Arik, Kfar Vitkin (IL); Storfer, Lior, Tel Aviv (IL)
(74) Representative: Holt, Michael

(57) **Abstract**

A method and system are provided for improving performance in a communication system comprising: receiving a plurality of data packets from a transmitter; generating a queue of a plurality of acknowledgements each indicating receipt of one or more of the data packets; and sending only the last acknowledgement in the queue to the transmitter to indicate receipt of all of the data packets for which acknowledgements are queued. Other systems and methods are disclosed.

## Description

### FIELD OF THE INVENTION

This invention generally relates to communication systems, and more specifically to systems and methods for improving protocol performance.

### BACKGROUND OF THE INVENTION

DOCSIS 1.0 was the first step towards getting IP connectivity over cable to the home. It was a focused effort to provide best-effort type of service needed for data/Internet connectivity, with web-surfing and file downloading being the most dominant applications. DOCSIS 1.1 focused on enabling different types of services to work well on top of the cable access. Features like bandwidth and latency guarantees were essential for the delivery of voice. The work of defining DOCSIS 1.1 was an extensive effort. The end result of this work was the creation of a specification that, more than anything else, is a set of tools. These tools enable the establishment of different types of service flows needed by different applications. Although DOCSIS 1.1 focused on voice, the tools of DOCSIS 1.1 bring significant value in other traffic scenarios. One of the most common traffic scenarios is data connectivity to the Internet. The most recent iteration is DOCSIS 2.0, which continues the effort to provide improved tools.

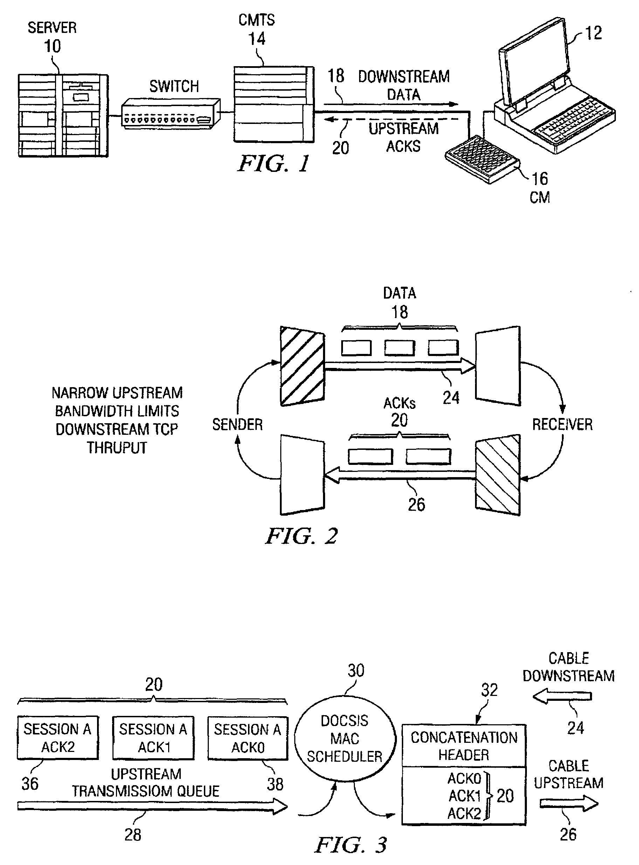

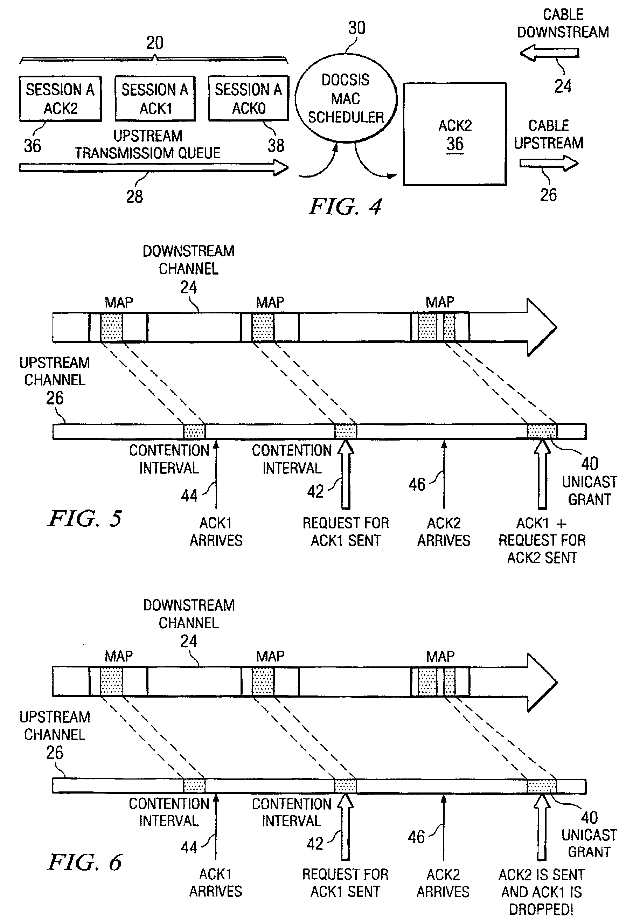

Referring to Figures 1 and 4, most common applications (i.e. web surfing, FTP) run over TCP, which is connection-based. Data 18 that flows over the cable downstream 24 from a server 10 to the client side PC 12 requires an acknowledgement 20 to be sent back. In an FTP "get," for example, typical packet size in the downstream direction is 1518 bytes while the ACKs are 64 bytes.

TCP works with a sliding window. A few packets are sent from the server 10, which then expects to receive ACKs 20 (generally one ACK for each 2 packets received by the end PC 12). If the server does not receive an ACK 20 after it has already sent out a "window" number of bytes, it stops sending and waits for the ACK 20. The high throughput potential of the downstream path 24 (40mbit/sec in 256QAM modulation) is bottlenecked by the transmission of ACKs 20 on the upstream direction 26.

DOCSIS 1.1 defines different types of services. Of these, the most commonly used are *Best Effort* for data transmission and *Constant Bit Rate* for voice. Best Effort service, as the name suggests, does not guarantee a particular level of throughput or latency. These depend on the load of the system as well as the physical parameters with which the system is configured to work. The request-grant handshake for best effort data limits the number of bursts per second that may be transmitted. This is the bottleneck of the upstream channel 26.

Both the PC 12 and server 10 affect the performance of TCP. The PC 12 advertises its receive window size. If the size of the TCP receive window is small, the server 10 will only transmit a small window of packets 18 each RTT. This will result in short bursts of downstream 24 traffic with relatively long delays between them while the server 10 waits for ACKs 20 to arrive from the upstream 26.

### SUMMARY OF THE INVENTION

In general, and in a form of the present invention methods and systems are provided for improving performance in a communication system. In accordance with the present invention, a method is provided for improving performance in a communication system comprising the steps of: receiving a plurality of data packets from a transmitter; generating a queue of a plurality of acknowledgements each indicating receipt of one or more of the data packets; and sending only the last acknowledgement in the queue to the transmitter to indicate receipt of all of the data packets for which acknowledgements are queued.

In another form of the present invention, a method for improving performance in a communications system is provided comprising the steps of: receiving a first data packet from a transmitter; generating an acknowledgement indicating receipt of the data packet; sending a request to send the acknowledgment to the transmitter of the data packet; receiving one or more additional data packets from the transmitter; generating one or more additional acknowledgments indicating receipt of the additional data packets; receiving a grant from the transmitter in response to the request; and sending only the last acknowledgement generated to indicate receipt of all of the data packets for which acknowledgements were generated.

In yet another form of the present invention, a method for improving performance in a communications system is provided comprising the steps of: receiving one or more first data packets from a transmitter; generating a first acknowledgement indicating receipt of the first data packets; delaying transmission of the first acknowledgement to the transmitter for a predetermined delay time; generating a second acknowledgement if one or more second data packets are received during the delay time; sending the first acknowledgement to the transmitter when or after the delay time expires if no second acknowledgement has been generated; and sending the second acknowledgement and discarding the first acknowledgement if the second acknowledgement is generated before the delay time expires.

### Other systems and methods are provided.

### BRIEF DESCRIPTION OF THE DRAWINGS

Particular embodiments in accordance with the invention will now be described, by way of example only, and with reference to the accompanying drawings in which like reference signs are used to denote like parts and in which:
Figure 1 is a block diagram of an exemplary cable modem communication system in which the present invention may be practiced;
Figure 2 illustrates a downstream and upstream data channel;
Figure 3 is a representation of a prior art approach for ACK transmission; upstream transmission in an embodiment of the present invention;
Figure 4 is a representation of ACK transmission in embodiment of the present invention;
Figure 5 is a representation of a prior art approach for ACK transmission; upstream transmission in an embodiment of the present invention; and
Figure 6 is a representation of ACK transmission in embodiment of the present invention.

Corresponding numerals and symbols in the different figures and tables refer to corresponding parts unless otherwise indicated.

### DETAILED DESCRIPTION OF EMBODIMENTS OF THE INVENTION

Although the invention finds particular application to cable modem systems and a TCP protocol, it also finds application to other forms of communication systems and protocols.

Factors specific to the upstream Media Access Control layer of DOCSIS can, on a momentary or extended basis, reduce the amount of upstream bandwidth available for a particular TCP session to an extent which impairs downstream 24 direction data flow. As a consequence, the TCP session uses less than the full amount of downstream 24 bandwidth available. Moreover, the DOCSIS 1.1 concatenation mechanism transmits packets in a burst - from a session's perspective, this partially eliminates the smoothing of the downstream 24 transmission pattern characteristic of a steady ACK 20 stream. This means that upstream 26 bandwidth is being wasted by transmitting ACKs 20 that do not contribute to efficient session behavior. In an embodiment of the present invention, these issues are addressed by applying a packet scheduling technique known as "Ack Filtering" in a manner appropriate to the variable packet delays of the DOCSIS upstream 26.

Some embodiments of the present invention relate to the performance of TCP-based data transfer in the environment of a DOCSIS (Cable) data network such as the one depicted in Figure 1. In this environment, a PC 12 or other user is connected to a Cable Modem 16 with a DOCSIS connection to a Cable Modem Termination System 14, which in turn is connected to a TCP/IP data network such as the public internet 10. TCP-based download (such as HTTP or FTP) is frequently conducted in such an environment. Data packets 18 flow on the DOCSIS downstream 24 link. TCP protocol acknowledgments 20 flow on the DOCSIS upstream 26 link.

The illustration in Figure 2 shows a transmitter that is not using the downstream data channel 24 because ACK packets 20 are not arriving fast enough on the upstream 26.

In an embodiment of the present invention, ACKs 20 are eliminated from within a DOCSIS concatenation 32. In the situation where a DOCSIS Cable Modem 16 is preparing to send a series of ACKs 20 belonging to a particular TCP session within a DOCSIS concatenation frame 32, an embodiment of the present invention provides for transmitting the final ACK 36 (i.e. the ACK bearing the highest acknowledgment number) only. If the concatenation 32 was to include ACKs 20 belonging to more than one session, or ACKs 20 together with data, the final ACK 36 only of each particular data session is preferably transmitted under this embodiment. Figures 3 and4 compare the prior art approach with an embodiment of the present invention.

In a circumstance where a series of ACKs 20 belonging to a particular TCP session have become queued 28 in front of a DOCSIS token bucket rate limiter, only the final ACK 36 is transmitted when the token for the first ACK 38 becomes available. Typical scheduling would transmit the first ACK 38 or transmit a series of packets 20 in a DOCSIS concatenation 32. Transmitting the final ACK 36 in a series 20 rather than transmitting the entire series 20 in a concatenation 32 reduces the amount of bandwidth required and increases the bandwidth available for other traffic.

In the prior art approach, shown in Figure 3, the DOCSIS MAC scheduler 30 packages a series of ACKs 20 into a DOCSIS concatenation frame 32 and transmits the concatenation frame 32 on the cable upstream 26. In an embodiment of the present invention, the DOCSIS MAC scheduler 30 transmits only the final ACK 36 of the series 20. ACKs 20 may be selected for discard by virtue of their positioning in DOCSIS MAC transmission. Transmitting the final ACK 36 in a series 20 rather than transmitting the entire series 20 in a concatenation 32 reduces the amount of bandwidth required by a session, increases the bandwidth available for other traffic, and more promptly enables the transmitter to begin sending more data (thus increasing throughput).

In general, ACK filtering techniques suffer from the undesirable side effect of increasing the burstiness of TCP traffic. However, the already-bursty nature of DOCSIS concatenation 32 guarantees that the present invention will have minimal impact on the burstiness of the session flow. Specifically, the per-transmission overhead of the DOCSIS upstream 26 causes a single ACK 36 to arrive at the transmitter at the same time as it would if it were the final ACK of a concatenation frame 32. This embodiment of the present invention exploits the already bursty nature of the DOCSIS upstream 26 MAC so that discarding ACKs 20 does not add to the burstiness that is already present in the network. The bursty nature of DOCSIS concatenation 32 guarantees that doing this will have minimal impact on the burstiness of the session flow.

In an embodiment of the present invention, substitution of ACKs within the context of the DOCSIS upstream 26 MAC algorithm is provided. In the situation where an ACK packet 44 belonging to a particular TCP session has become queued 28 at the front of an upstream 26 link awaiting a DOCSIS grant 40 (i.e. subsequent to the DOCSIS upstream 26 bandwidth request), an embodiment of the present invention transmits the most recently received ACK 46 from the same session when the DOCSIS grant 40 is ultimately received and discards any prior ACKs 44.

In other words, where a series of ACKs 20 belonging to a particular TCP session have become queued 28 in front of an upstream 26 link awaiting a DOCSIS grant 40 (for the first queued ACK 44), the final ACK 46 is transmitted instead when the DOCSIS grant 40 is received and earlier ACKs 44 are dropped. This approach exploits the fact that the DOCSIS request/grant mechanism specifies only a transmission burst size, so that another packet of the same size may be substituted. Figures 5 and 6 compare the prior art approach with an embodiment of the present invention.

In the prior art approach, illustrated in Figure 5, an ACK 46 received between DOCSIS Request 42 and Grant 40 is queued. In an embodiment of the present invention, an ACK 46 received between DOCSIS Request 42 and Grant 40 is transmitted in the place of the first ACK 44 (subject to the restraints and requirements of the TCP protocol).

In an embodiment of the present invention, substitution of ACKs 46 within the context of the DOCSIS upstream MAC algorithm is provided. ACKs 46 are substituted in between the DOCSIS Upstream 26 MAC bandwidth request 42 and grant 40. Substituting ACK packets 46 between DOCSIS Request 42 and Grant 40 reduces the amount of bandwidth required by a session, increases the bandwidth available for other traffic, and more promptly enables the transmitter to begin sending more data (thus increasing throughput).

Substituting ACK packets 46, between DOCSIS Request 42 and Grant 40 exploits the fact that the DOCSIS request/grant mechanism specifies only a transmission burst size, so that another packet of the same size may be substituted. Substituting ACK packets 46 between DOCSIS Request 42 and Grant 40 also reduces the quantity of upstream 26 bandwidth used by a session and reduces packet latency/round-trip-time; this boosts the performance and throughput of TCP sessions.

Unlike prior art approaches to ACK Filtering, the present invention permits discard of ACKs 44 even after the packet transmission by the MAC layer has begun. This is especially significant because the time between DOCSIS Request 42 and Grant 44 is often 2 milliseconds or more - this is an amount of time in which several ACKs after the first one can often be received.

In an embodiment of the present invention ACK 20 transmission may be delayed according to DOCSIS rate limit to enable ACK filtering even in rate limited channels. ACKs 20 can be delayed in transmission for a pre-determined period of time. Within this time, it is probable that another ACK 20 of the same TCP flow will get also queued for transmission 28. As a result, the first ACK 44 may be filtered. The duration of the delay added to the ACK 44 that will "probably be filtered" may be determined by the rate of the TCP session. The higher the session rate, the lower the delay needs to be. If within the delay time a new ACK 46 does not arrive, the delayed ACK 44 will be transmitted. By delaying ACKs in a rate limited environment ACK filtering may be utilized. In a prior art rate limited DOCSIS upstream channel, ACK filtering will not take place even though there is redundancy in the session. By utilizing ACK delay in such a scenario, reduction in the amount of traffic in the channel 26 needed for ACKs 20 is achieved.

The present invention may be subject to the same qualifications applied to ACK filtering in other contexts such as not discarding ACKs during a session's slow start phase, limiting the number of ACKs discarded to prevent burstiness or retransmission timeouts, etc.

While the invention has been described with reference to illustrative embodiments, this description is not intended to be construed in a limiting sense. Various other embodiments of the invention will be apparent to persons skilled in the art upon reference to this description. For example, the embodiments are described in the context of a cable modem system. However, the invention could be used in other types of communication systems. As an additional example, the embodiments are described in the context of a TCP protocol and ACK packets. However, the invention could be applied to other appropriate protocols and elements.

It is therefore contemplated that the appended claims will cover any such modifications of the embodiments as fall within the true scope and spirit of the invention.

## Claims

1. A method for improving performance in a communications system comprising the steps of:
a. receiving a plurality of data packets from a transmitter;
b. generating a queue of a plurality of acknowledgements each indicating receipt of one or more of the data packets; and
c. sending only the last acknowledgement in the queue to the transmitter to indicate receipt of all of the data packets for which acknowledgements are queued.

2. The method of claim 1 wherein the data packets are transmitted on a downstream channel.

3. The method of claim 1 or claim 2 wherein the last acknowledgement is sent on an upstream channel.

4. The method of any preceding claim wherein the communication system is a cable modem system.

5. The method of any preceding claim wherein the transmitter is a cable modem termination system.

6. The method of any preceding claim wherein the acknowledgements are generated by a cable modem.

7. A method for improving performance in a communications system comprising the steps of:
a. receiving a first data packet from a transmitter;
b. generating an acknowledgement indicating receipt of the data packet;
c. sending a request to send the acknowledgment to the transmitter of the data packet;
d. receiving one or more additional data packets from the transmitter;
e. generating one or more additional acknowledgments indicating receipt of the additional data packets;
f. receiving a grant from the transmitter in response to the request; and
g. sending only the last acknowledgement generated to indicate receipt of all of the data packets for which acknowledgements were generated.

8. A method for improving performance in a communications system comprising the steps of:
a. receiving one or more first data packets from a transmitter;
b. generating a first acknowledgement indicating receipt of the first data packets;
c. delaying transmission of the first acknowledgement to the transmitter for a predetermined delay time;
d. generating a second acknowledgement if one or more second data packets are received during the delay time;
e. sending the first acknowledgement to the transmitter when or after the delay time expires if no second acknowledgement has been generated; and
f. sending the second acknowledgement and discarding the first acknowledgement if the second acknowledgement is generated before the delay time expires.

9. The method of claim 7 or claim 8 wherein the data packets are transmitted on a downstream channel.

10. The method of claim 7 or claim 8 or claim 9wherein the acknowledgements are sent on an upstream channel.

11. The method of any of claims 7 to 10 wherein the communication system is a cable modem system.

12. The method of any of claims 7 to 11 wherein the transmitter is a cable modem termination system.

13. The method of any of claims 7 to 12 wherein the acknowledgements are generated by a cable modem.
